# EUROPÄISCHE PATENTSCHRIFT

(11) **EP 4 545 845 B1**
(45) Veröffentlichungstag und Bekanntmachung des Hinweises auf die Patenterteilung: **08.04.2026**
(21) Anmeldenummer: 23205834.7
(22) Anmeldetag: 25.10.2023
(51) Int. Cl.: F21S 41/143, F21S 41/24, F21S 41/25, F21S 41/32, F21S 41/27

(54) **BELEUCHTUNGSVORRICHTUNG FÜR EINEN KRAFTFAHRZEUGSCHEINWERFER SOWIE KRAFTFAHRZEUGSCHEINWERFER**
LIGHTING DEVICE FOR A MOTOR VEHICLE HEADLIGHT AND MOTOR VEHICLE HEADLIGHT
DISPOSITIF D'ÉCLAIRAGE POUR UN PHARE DE VÉHICULE AUTOMOBILE ET PHARE DE VÉHICULE AUTOMOBILE

(43) Veröffentlichungstag der Anmeldung: 30.04.2025
(73) Patentinhaber: ZKW Group GmbH, 3250 Wieselburg (AT)
(72) Erfinder: Schager, Alexander Thomas, 3270 Scheibbs (AT); Stöger, Bernhard, 3213 Frankenfels (AT); Zusser, Dominik, 3325 Ferschnitz (AT); Go, Donghyun, 38658 Gyeongsan-si (KR)
(74) Vertreter: Patentanwaltskanzlei Matschnig & Forsthuber OG

(56) Entgegenhaltungen:
- EP-A1- 4 067 734
- WO-A1-2018/023141
- WO-A1-2023/038010
- CN-A- 115 183 196
- JP-A- 2014 203 587
- JP-A- 2017 084 556

## Beschreibung

Die Erfindung betrifft eine Beleuchtungsvorrichtung für einen Kraftfahrzeugscheinwerfer zum Erzeugen einer Lichtverteilung mit einer Hell-Dunkel-Grenze, wobei die Beleuchtungsvorrichtung
- zumindest eine Lichtquelle,
- einen lichtdurchlässigen Körper,
- zumindest ein Lichteinkoppelelement zum Einkoppeln von Licht, welches die zumindest eine Lichtquelle emittiert, in den lichtdurchlässigen Körper sowie
- eine Projektionsvorrichtung aufweist, wobei die Projektionsvorrichtung eine Brennfläche sowie eine optische Achse aufweist,
wobei über das Lichteinkoppelelement Licht der zumindest einen Lichtquelle in den lichtdurchlässigen Körper einkoppelt, welches sich in dem lichtdurchlässigen Körper als erstes Lichtbündel zu einer Lichtaustrittsfläche des lichtdurchlässigen Körpers fortpflanzt, und wobei der lichtdurchlässige Körper von einer oberen Begrenzungsfläche und einer der oberen Begrenzungsfläche gegenüberliegenden unteren Begrenzungsfläche begrenzt ist, wobei zumindest ein Teil der an der oberen und/oder unteren Begrenzungsfläche auftreffenden Lichtstrahlen des ersten Lichtbündels an der jeweiligen Begrenzungsfläche ein- oder mehrfach totalreflektiert wird, und wobei der lichtdurchlässige Körper von einer Lichtaustrittsfläche begrenzt ist, und wobei die an der zumindest einen Begrenzungsfläche ein- oder mehrfach totalreflektierten Lichtstrahlen, welche über die Lichtaustrittsfläche aus dem Körper austreten, sowie jene von der Lichtquelle eingekoppelten Lichtstrahlen, welche sich ohne Reflexion durch den lichtdurchlässigen Körper bis zu der Lichtaustrittsfläche fortpflanzen und über diese aus dem Körper austreten, von dem lichtleitenden Körper zu einem zweiten Lichtbündel modifiziert wird, welches von der Projektionsvorrichtung als die zu erzeugende Lichtverteilung abgebildet wird.

Die Lichtaustrittsfläche liegt beispielsweise dem Lichteinkoppelelement gegenüber.

Weiters betrifft die Erfindung einen Kraftfahrzeugscheinwerfer mit zumindest einer solchen Beleuchtungsvorrichtung.

Aus dem Stand der Technik sind oben beschriebene Beleuchtungsvorrichtungen bekannt, bei welchen durch Modifikation des lichtdurchlässigen Körpers, des Lichteinkoppelelementes oder der Projektionsvorrichtung zusätzlich zu einer Vorfeld- oder Abblendlichtverteilung mit der zumindest einen Lichtquelle weiters eine Signlight-Lichtverteilung erzeugt werden kann. WO 2018/023141 A1 und WO 2023/0385010 A1 offenbaren Beleuchtungsvorrichtungen mit Signlight-Lichtverteilung.

Bei den bekannten Lösungen ist die erzeugte Signlight-Lichtverteilung relativ homogen. Um Lichtstärke-Werte, die z.B. gesetzlich vorgegeben sind, in definierten Punkten der Lichtverteilung zu erreichen, ist es dadurch aber häufig notwendig, dass die Lichtstärke der gesamten Signlight-Lichtverteilung vergleichsweise hoch ist. Dies führt allerdings dazu, dass in anderen Punkten die Lichtstärke-Werte höher als gewünscht oder sogar höher als gesetzlich erlaubt sind.

Es ist eine Aufgabe der Erfindung, eine Beleuchtungsvorrichtung bereitzustellen, mit welcher zusätzlich zu einer Vorfeld- oder Abblendlichtverteilung eine Signlight-Lichtverteilung erzeugt werden kann und die oben genannten Nachteile behoben sind. Weiters kann es eine Aufgabe der Erfindung sein, eine Signlight-Lichtverteilung zu erzeugen, welche im Besonderen auf die Eigenarten der Regelung in den USA, beispielsweise der Reglung FMVSS 108, Rücksicht nimmt.

Diese Aufgabe wird mit einer eingangs beschriebenen Beleuchtungsvorrichtung dadurch gelöst, dass erfindungsgemäß an bzw. in der unteren Begrenzungsfläche zumindest eine erste optische Auskoppelstruktur und zumindest eine zweite optische Auskoppelstruktur vorgesehen sind, und wobei die optischen Auskoppelstrukturen derart ausgebildet sind, dass Licht des ersten Lichtbündels, welches auf eine optische Auskoppelstruktur trifft, aus dem lichtdurchlässigen Körper austritt, wobei das aus der zumindest einen ersten optische Auskoppelstruktur austretende Licht sich in Form eines dritten Lichtbündels außerhalb des lichtdurchlässigen Körpers zu der Projektionsvorrichtung fortpflanzt, und wobei das aus der zumindest einen zweiten optische Auskoppelstruktur austretende Licht sich in Form eines vierten Lichtbündels außerhalb des lichtdurchlässigen Körpers zu der Projektionsvorrichtung fortpflanzt, wobei die zumindest eine zweite optische Auskoppelstruktur weiter von der Brennfläche entfernt ist als die zumindest eine erste optische Auskoppelstruktur, und wobei das dritte und vierte Lichtbündel direkt, d.h. ohne vorhergehenden Wiedereintritt in den lichtdurchlässigen Körper, auf die Projektionsvorrichtung auftreffen und von dieser als Signlight-Lichtbündel in einen oberhalb der Hell-Dunkel-Grenze liegenden Bereich projiziert werden und gemeinsam beispielsweise eine Signlight-Lichtverteilung bilden, wobei die beiden Signlight-Lichtbündel in unterschiedliche Teilbereiche des oberhalb der Hell-Dunkel-Grenze liegenden Bereiches abgebildet werden.

Vorzugsweise sind genau eine erste und genau eine zweite Auskoppelstruktur vorgesehen.

Es kann vorgesehen sein, dass sich die zumindest eine erste und die zumindest eine zweite optische Auskoppelstruktur jeweils über eine definierte Quererstreckung quer zu der optischen Achse der Projektionsvorrichtung erstreckt, und wobei sich die zumindest eine erste und die zumindest eine zweite optische Auskoppelstruktur jeweils über eine definierte Längserstreckung in etwa in Richtung der optischen Achse der Projektionsvorrichtung erstrecken.

Durch die erfindungsgemäße Ausgestaltung werden zwei unterschiedliche Signlight-Lichtbündel erzeugt, welche unterschiedliche Bereiche in der Lichtverteilung beleuchten und gemeinsam die Signlight-Lichtverteilung bilden. Durch entsprechende Ausgestaltung der unterschiedlichen Auskoppelstrukturen, beispielsweise hinsichtlich der Größe bzw. Ausdehnung der jeweiligen Auskoppelstruktur, kann die Lichtmenge der einzelnen Signlight-Lichtbündel und somit die Lichtstärke in der Lichtverteilung beeinflusst werden. Durch die unterschiedlichen Abstände der Auskoppelstrukturen zu der Brennfläche bzw. der Petzvalfläche der Projektionsvorrichtung werden die Lichtstrahlen, welche aus der weiter entfernten Auskoppelstruktur austreten, im Lichtbild unschärfer, d.h. "verschmiert" abgebildet und erzeugen eine homogenere Beleuchtung im Lichtbild, während die Lichtstrahlen aus dem zur Petzvalfläche bzw. Brennfläche näher liegenden Auskoppelstruktur schärfer bzw. fokussierter abgebildet werden und somit einen kleineren Bereich oder kleinere Bereiche heller beleuchten.

Vorteilhafte Ausgestaltungen der Erfindung sind in an abhängigen Ansprüchen beschrieben.

Vorzugsweise ist vorgehen, dass das dritte und vierte Lichtbündel in unterschiedlichen Bereichen der Projektionsvorrichtung, insbesondere unterhalb einer optischen Achse der Projektionsvorrichtung, auf die Projektionsvorrichtung auftreffen und durch diese durchtreten, wobei diese Bereiche der Projektionsvorrichtung das dritte und vierte Lichtbündel als Signlight-Lichtbündel in den oberhalb der Hell-Dunkel-Grenze liegenden Bereich projizieren und beispielsweise eine Signlight-Lichtverteilung bilden, wobei die beiden Signlight-Lichtbündel in unterschiedliche Teilbereiche des oberhalb der Hell-Dunkel-Grenze liegenden Bereiches abgebildet werden.

Dabei stellt die optische Achse der Projektionsvorrichtung gleichzeitig auch optische Achse der Beleuchtungsvorrichtung dar.

Von Vorteil ist es, wenn die zumindest eine erste optische Auskoppelstruktur und die zumindest eine zweite optische Auskoppelstruktur derart ausgebildet und angeordnet sind, dass das dritte und vierte Lichtbündel derart auf die Projektionsvorrichtung bzw. in einem Bereich der Projektionsvorrichtung auftreffen, dass die Teilbereiche, in welche die austretenden Signlight-Lichtbündel von der Projektionsvorrichtung projiziert werden, sich entweder teilweise überlappen, oder zumindest in einem Abschnitt aneinander angrenzen, oder voneinander beabstandet sind.

Es kann vorgesehen sein, dass die zumindest eine erste optische Auskoppelstruktur als Erhöhung an oder als Vertiefung in dem lichtdurchlässigen Körper ausgebildet ist, und wobei die zumindest eine zweite optische Auskoppelstruktur als Erhöhung an oder als Vertiefung in dem lichtdurchlässigen Körper ausgebildet ist.

Weiters kann vorgesehen sein, dass die zumindest eine erste und die zumindest eine zweite optische Auskoppelstruktur eine unterschiedlich große Querstreckung aufweisen, wobei vorzugsweise die näher bei der Lichtaustrittsfläche befindliche, zumindest eine erste Auskoppelstruktur eine geringere Quererstreckung aufweist als die zumindest eine zweite Auskoppelstruktur.

Auf diese Weise kann die aus den Auskoppelstrukturen austretende Lichtmenge gesteuert werden.

Es kann vorgesehen sein, dass zumindest eine der optischen Auskoppelstrukturen hinsichtlich ihrer Quererstreckung symmetrisch in Bezug auf die optische Achse der Projektionsvorrichtung verläuft, wobei vorzugsweise eine erste oder zweite optische Auskoppelstruktur symmetrisch und die andere, zweite oder erste optische Auskoppelstruktur asymmetrisch in Bezug auf die optische Achse der Projektionsvorrichtung verläuft.

Eine symmetrisch angeordnete Auskoppelstruktur liefert im Lichtbild eine hinsichtlich der vertikalen Achse (V-V-Achse) symmetrische Beleuchtungsstärke-Verteilung, während eine asymmetrisch angeordnete Auskoppelstruktur eine hinsichtlich der vertikalen Achse asymmetrische Beleuchtungsstärke-Verteilung erzeugt. Beispielsweise sind in den USA nach der Regelung FMVSS108 entlang der in dieser Regelung beschriebenen Linien 5 - 5 und 8-8 bestimmte Beleuchtungsstärken vorgeschrieben, wobei die Lage dieser Linien asymmetrisch bezüglich der V-V Linie ist. Mit einer entsprechenden asymmetrischen Anordnung einer Auskoppelstruktur können die geforderten Beleuchtungsstärken auch hinsichtlich solcher asymmetrisch liegenden Linien bzw. Bereich realisiert werden. Die Grund-Signlight-Lichtverteilung ist symmetrisch hinsichtlich ihrer Beleuchtungsstärke-Verteilung und wird mit einer symmetrischen Auskoppelstruktur realisiert.

Vorzugsweise ist vorgesehen, dass die Querrichtung, in welche sich die zumindest eine erste und/oder die zumindest eine zweite optische Auskoppelstruktur erstreckt bzw. erstrecken, im Wesentlichen normal zu der ersten Lichtausbreitungsrichtung und/oder normal zu der optischen Achse der Projektionsvorrichtung und vorzugsweise im Wesentlichen horizontal verläuft bzw. verlaufen.

Weiters kann vorgesehen sein, dass die zumindest eine erste und/oder die zumindest eine zweite Auskoppelstruktur in Form eines Auskoppelprismas ausgebildet ist bzw. sind oder Auskoppelprismen aufweist/aufweisen.

Es kann dabei vorgesehen sein, dass jedes Auskoppelprisma eine Austrittsfläche aufweist, welche derart ausgebildet und derart geneigt ist, dass die austretenden Lichtbündel in den bzw. die Bereiche der Projektionsvorrichtung, welche das dritte und vierte Lichtbündel als Signlight-Lichtbündel in den oberhalb der Hell-Dunkel-Grenze liegenden Bereich projizieren, gerichtet werden.

Beispielsweise ist vorgesehen, dass zumindest eine Austrittsfläche bzw. beide Austrittsflächen horizontal, d.h. in horizontalen Schnitten, gekrümmt, insbesondere konkav gekrümmt ist bzw. sind, wobei vorzugsweise horizontale Schnittkurven, die sich durch Schneiden einer derart gekrümmten Austrittsfläche mit horizontalen Ebenen ergeben, die Form eines Teilkreises aufweisen oder der Form der Petzvalfläche der Projektionsvorrichtung folgen.

Es kann vorgesehen sein, dass vertikal, d.h. in vertikalen Schnitten, die zumindest eine bzw. vorzugsweise beide Austrittsflächen nicht gekrümmt sind.

Bevorzugt ist vorgesehen, dass eine Austrittsfläche bzw. die Austrittsflächen derart geneigt sind, dass die durch die Austrittsfläche bzw. durch die Austrittsflächen durchtretenden bzw. austretenden Lichtbündel orthogonal auf die Auftrittsfläche bzw. die Austrittsflächen verlaufen.

Dadurch können Verluste verringert und Farbfehler reduziert werden.

Dabei kann durch entsprechende Ausgestaltung des Lichteinkoppelelementes ein Parallelstrahl-Fächer derart geformt werden, dass ein Auftreffen der Lichtstrahlen unter einem Winkel von 90° auf die Austrittsflächen, gesehen über die Querausdehnung der Austrittsflächen, sichergestellt werden.

Weiters ist vorzugsweise vorgesehen, dass der lichtdurchlässige Körper eine Blendenkante aufweist, welche in Lichtausbreitungsrichtung zwischen dem Lichteinkoppelelement und der Projektionsvorrichtung angeordnet ist, wobei die Blendenkante in der Lichtverteilung als die Hell-Dunkle-Grenze abgebildet wird.

Die Blendenkante ist dafür verantwortlich, das erste Lichtbündel derart zu dem zweiten, aus dem lichtdurchlässigen Körper austretenden Lichtbündel zu modifizieren, dass die von der Projektionsvorrichtung erzeugte Lichtverteilung eine Hell-Dunkel-Grenze aufweist. Die Form der HD-Grenze in der Lichtverteilung wird von der Form der Blendenkante bestimmt. Der Verlauf der Blendenkannte definiert die Grenzstrahlen, die gerade noch zur Lichtverteilung beitragen.

Die Blendenkante wird von der Lichtaustrittsfläche und der unteren Begrenzungsfläche gebildet, d.h. die beiden Flächen laufen in der Blendenkante zusammen.

Weiters kann vorgesehen sein, dass das Lichteinkoppelelement das von der Lichtquelle emittierte, in das Lichteinkoppelelement eingekoppelte Licht, zu dem ersten Lichtbündel formt, wobei vorzugsweise das Lichtbündel in einen Bereich, insbesondere in einen Bereich oberhalb, vorzugsweise knapp oberhalb der Blendenkante gerichtet ist.

Dieser Bereich liegt bzw. erstreckt sich dabei insbesondere knapp oberhalb der Blendenkante.

Vorzugsweise ist vorgesehen, dass die Blendenkante in horizontaler Richtung gekrümmt, insbesondere konkav gekrümmt, ausgebildet ist, und vorzugsweise der Brennpunktlinie der Projektionsvorrichtung der Blendenkante folgt, wobei vorzugsweise die Blendenkante in bzw. in etwa in der Petzvalfläche der Projektionsvorrichtung liegt.

Hinsichtlich der Formulierung, wonach die Blendenkante in der Petzvalfläche liegt, sei darauf hingewiesen, dass exakt gesprochen die Zusammenhänge wie folgt sind: die Projektionsvorrichtung weist einen Brennpunkt auf, welcher auf der optischen Achse der Projektionsvorrichtung liegt. Die Petzvalfläche bzw. Brennpunktfläche enthält diesen Brennpunkt, ebenso wie eine Brennlinie durch diesen Brennpunkt verläuft und in der Petzvalfläche liegt.

Die Blendenkante liegt in der Regel nicht exakt in der Petzvalfläche bzw. im Brennpunkt, sondern in einem (geringen) Abstand darüber. Typischer Weise ist die Hell-Dunkel-Grenze im Lichtbild etwas unter die horizontale 0°-0°-Linie bzw. unter den Horizont abgesenkt, üblicher Weise um 0,573°. Um dies im Lichtbild zu realisieren, befindet sich die Blendenkante in vertikaler Richtung geringfügig, in der Praxis zumeist um einige zehntel Millimeter, oberhalb der optische Achse der Projektionsvorrichtung bzw. oberhalb des Brennpunktes.

Weiters kann vorgesehen sein, dass die Lichtaustrittsfläche in horizontaler Richtung konkav ausgebildet ist und vorzugsweise der Form der Petzvalfläche der Projektionsvorrichtung folgt.

Es kann auch vorgesehen sein, dass die Lichtaustrittsfläche in vertikaler Richtung konvex ausgebildet ist. Bei dieser Ausführungsform ist die Lichtaustrittsfläche ausgehend von der Blendenkante von der Petzval-Fläche weg geneigt. Die erzeugte Lichtverteilung wird etwas verschmiert, d.h. die erzeugte Lichtverteilung ist homogener und die Höhe der Projektionsvorrichtung kann verringert werden.

Beispielsweise ist vorgesehen, dass die zumindest eine Lichtquelle und/oder die Signlight-Lichtquelle jeweils ein oder mehrere lichtemittierende Elemente, z.B. ein oder mehrere LEDs, umfasst bzw. umfassen.

Im Folgenden ist die Erfindung an Hand der Zeichnung näher erörtert. In dieser zeigt
Fig. 1 die wesentlichen Bestandteile einer erfindungsgemäßen Ausführungsform einer Beleuchtungsvorrichtung für einen Kraftfahrzeugscheinwerfer in einer perspektivischen Ansicht von schräg unten,
Fig. 1a ein lichtdurchlässiger Körper der Beleuchtungsvorrichtung aus Figur 1 zur Strahlformung in einer perspektivischen Ansicht von schräg unten auf erfindungsmäße Auskoppelstrukturen,
Fig. 2 einen Vertikalschnitt durch die Beleuchtungsvorrichtung aus Figur 1 entlang einer Vertikalebene, welche durch die optische Achse der Projektionsvorrichtung verläuft,
Fig. 2a einen Vertikalschnitt durch eine alternative Beleuchtungsvorrichtung,
Fig. 3 eine Detailansicht der ersten Auskoppelstruktur in einer perspektiven Ansicht von unten,
Fig. 4 eine Detailansicht der ersten Auskoppelstruktur aus Figur 3 in einer Draufsicht von unten,
Fig. 5 einen Vertikalschnitt normal auf die optische Achse durch den lichtdurchlässigen Körper im Bereich der zweiten Auskoppelstruktur in einer Ansicht von vorne,
Fig. 6 einen Schnitt entlang der Linie A-A aus Figur 5,
Fig. 7 eine beispielhafte, schematische Darstellung einer Lichtverteilung in Form einer Abblendlichtverteilung und einer Signlight-Lichtverteilung, und
Fig. 8 eine beispielhafte Darstellung einer Lichtverteilung als Ergebnis einer lichttechnischen Simulation.

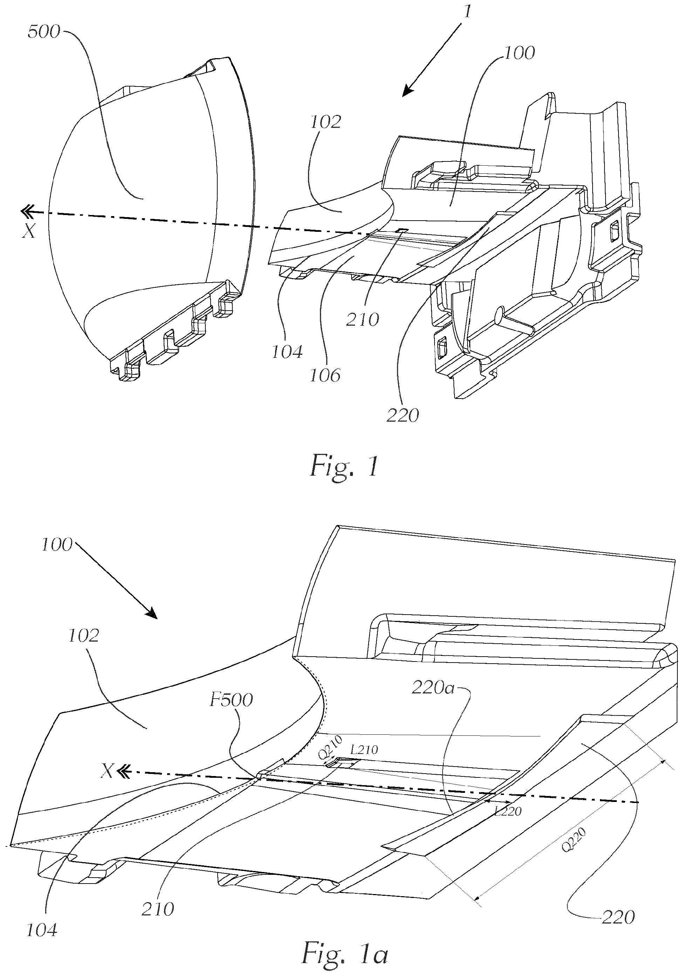

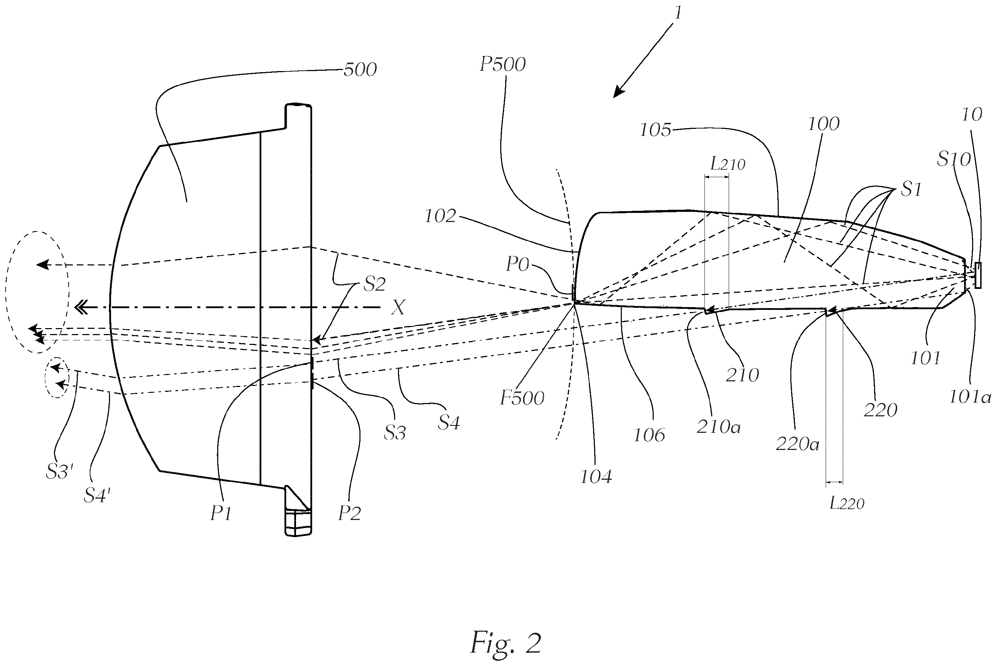

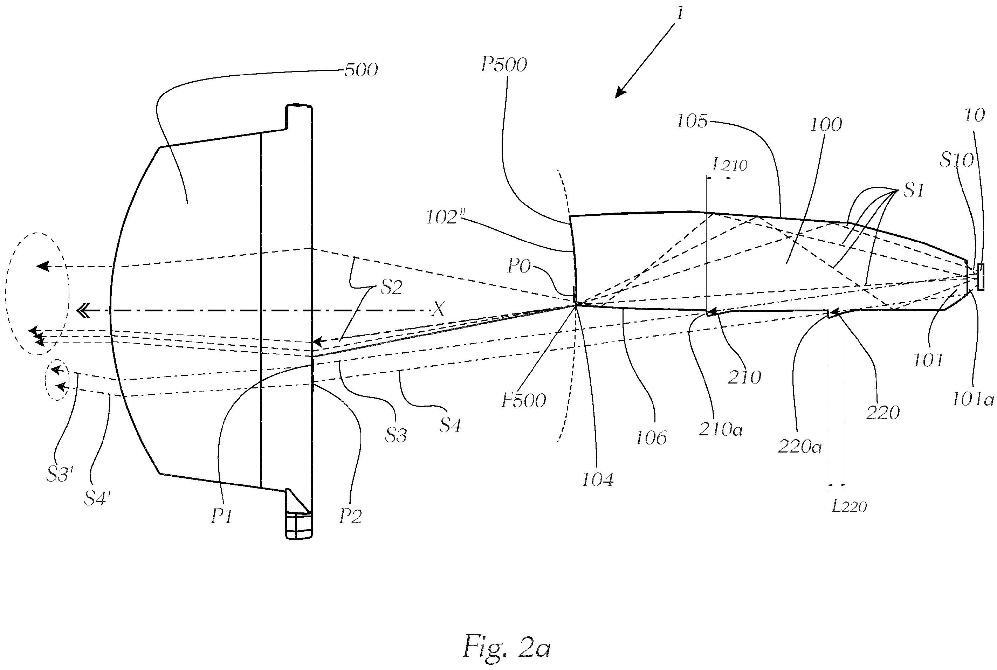

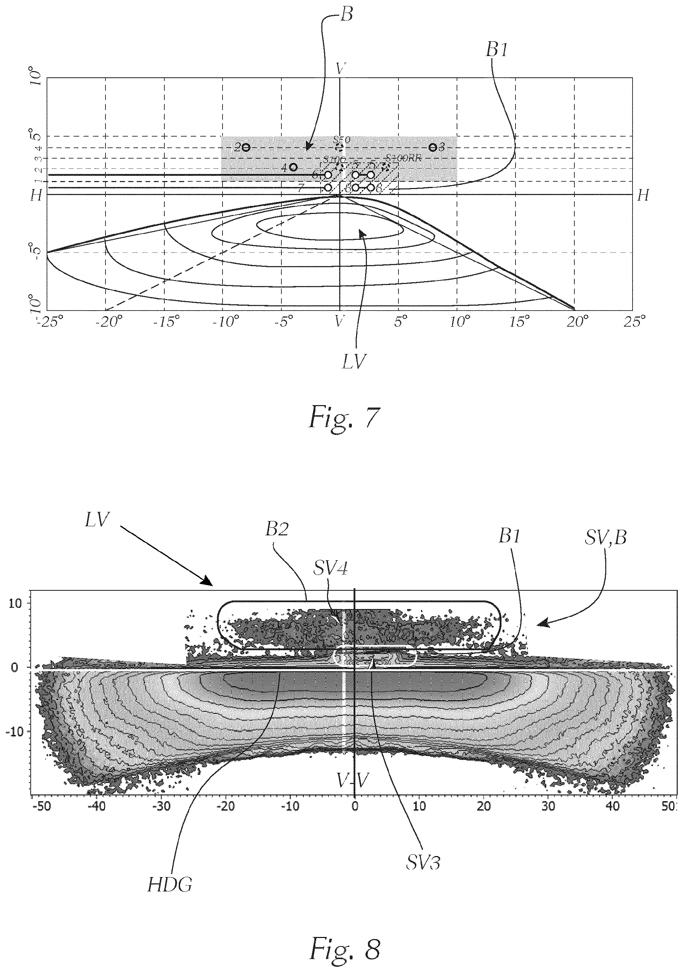

Die **Figur 1, 1a** **und** **2** zeigen eine Beleuchtungsvorrichtung 1 für einen Kraftfahrzeugscheinwerfer zum Erzeugen einer Lichtverteilung LV mit einer Hell-Dunkel-Grenze HDG, wobei die mit dieser Beleuchtungsvorrichtung 1 erzeugbaren Lichtverteilungen in **Figur 7 und 8** schematisch dargestellt sind, wobei **Figur 8** ein Lichtverteilung als Simulationsergebnis unter Verwendung einer erfindungsgemäßen Beleuchtungsvorrichtung zeigt.

**Figur 2a** zeigt eine alternative Ausgestaltung einer erfindungsgemäßen Beleuchtungsvorrichtung 1. Gleiche Bezugszeichen wie in den **Figuren 1, 1a** **und** **2** bezeichnen dieselben Elemente.

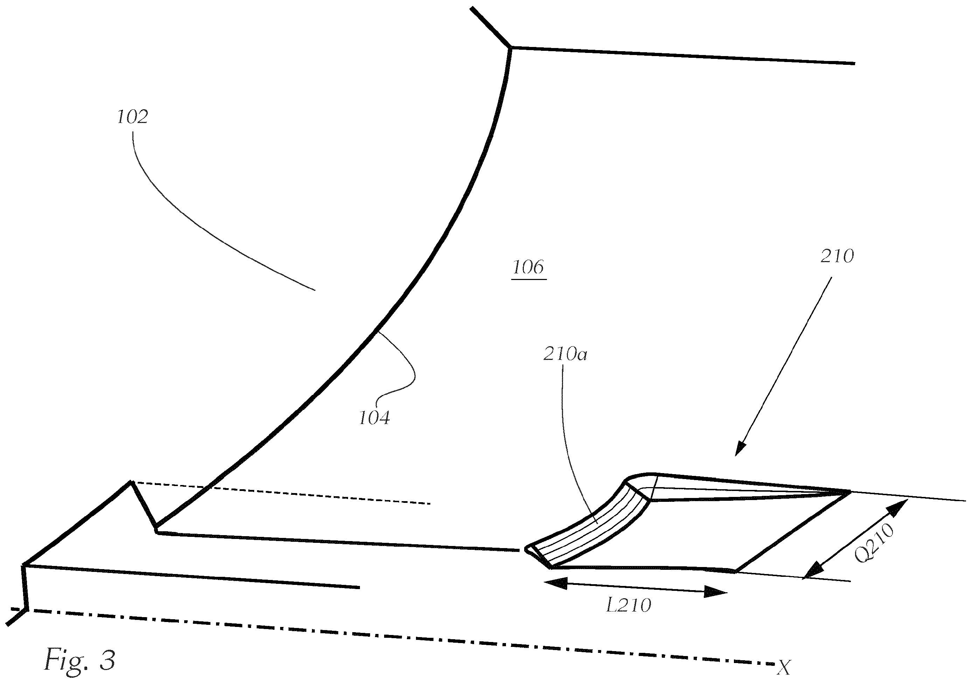

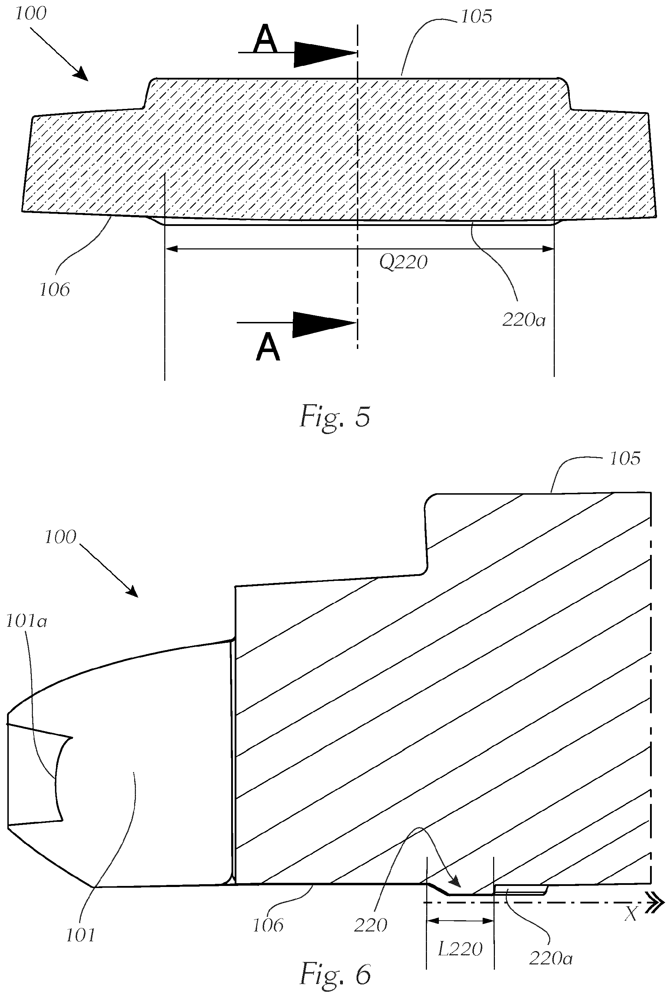

Die **Figuren 3 - 6** zeigen Details der Beleuchtungsvorrichtung 1, wobei diese für beide Ausführungsformen gelten.

Eine Beleuchtungsvorrichtung 1 gemäß **Figur 1, 1a** **und** **2** bzw. gemäß **Figur 2a** umfasst eine Lichtquelle 10, einen lichtdurchlässigen Körper 100, ein Lichteinkoppelelement 101 zum Einkoppeln von Licht in den lichtdurchlässigen Körper 100, welches die Lichtquelle 10 emittiert, sowie eine Projektionsvorrichtung 500, wobei die Projektionsvorrichtung 500 eine Brennfläche bzw. Petzvalfläche P500 aufweist. Die Projektionsvorrichtung 500 ist typischer Weise in Form einer Projektionslinse realisiert, kann aber auch einen komplexeren Aufbau in Form eines Linsensystems aufweisen. Die Petzvalfläche P500 enthält auch die Brennlinie der Projektionsvorrichtung 500, auf welcher - in einer horizontalen Ebene - die Brennpunkte der Projektionsvorrichtung 500 liegen.

Beispielsweise sind der lichtdurchlässige Körper 100 und das Lichteinkoppelelement 101 einstückig und vorzugweise aus demselben Material gebildet. Die Projektionsvorrichtung 500 ist vorzugsweise von diesen Elementen 100, 101 getrennt ausgebildet. Körper 100, Lichteinkoppelelement 101 und Projektionsvorrichtung 500 können aus demselben Material gebildet sein.

Das transparente, lichtdurchlässige Material, aus dem die Körper 100, 101, 500 gebildet sein können, weist einen Brechungsindex größer als jener von Luft auf. Das Material enthält z.B. PMMA (Polymethylmethacrylat) oder PC (Polycarbonat) und ist insbesondere vorzugsweise daraus gebildet. Die Körper können aber auch aus Glasmaterial, insbesondere anorganischem Glasmaterial gefertigt sein.

Über das Lichteinkoppelelement 101 wird Licht S10 (**Figur 2****,** **2a**), welches die Lichtquelle 10 emittiert, über eine Lichteintrittsfläche 101a des lichtdurchlässigen Körpers 100 in den lichtdurchlässigen Körper 100 eingekoppelt. Das Einkoppelelement 101 kann beispielsweise die Form einer abbildenden oder nicht-abbildenden Kollimatoroptik aufweisen. Die Lichteinkoppelfläche 101a ist jeweils einsprechend ausgestaltet, die in den Figuren gezeigte bzw. angedeutete plane Lichteinkoppelfläche 101a ist lediglich eine von mehreren, an sich bekannten Möglichkeiten der Ausgestaltung der Lichteinkoppelfläche 101a.

Bei der Lichtquelle bzw. generell bei der zumindest einen Lichtquelle handelt es sich beispielsweise jeweils um ein oder mehrere lichtemittierende Elemente, z.B. ein oder mehrere LEDs, die von der Lichtquelle bzw. der zumindest einen Lichtquelle umfasst sind.

Der lichtdurchlässige Körper 100 wird unter anderem von einer oberen Begrenzungsfläche 105 und einer der oberen Begrenzungsfläche 105 gegenüberliegenden unteren Begrenzungsfläche 106 sowie von einer der Lichteintrittsfläche 101a gegenüberliegenden Lichtaustrittsfläche 102, 102" begrenzt.

Das eingekoppelte Licht der Lichtquelle 10 pflanzt sich in dem lichtdurchlässigen Körper 100 im Wesentlichen in Richtung zu der Lichtaustrittsfläche 102 als erstes Lichtbündel S1 fort, wobei das Lichteinkoppelelement 101 das von der Lichtquelle 10 emittierte, in das Lichteinkoppelelement 101 eingekoppelte Licht zu dem ersten Lichtbündel S1 formt.

Das eingekoppelte Licht bewegt sich dabei zum Teil ohne Ablenkung, zu einem anderen Teil in Folge von Totalreflexion an Begrenzungsflächen, insbesondere an der oberen Begrenzungsfläche 105 und/oder unteren Begrenzungsfläche 106 in dem lichtdurchlässigen Körper 100 als Lichtbündel S1 in Richtung der Lichtaustrittsfläche 102 fort.

Der lichtdurchlässige Körper 100 weist eine Blendenkante 104 auf, welche in Lichtausbreitungsrichtung zwischen dem Lichteinkoppelelement 101 und der Projektionsvorrichtung 500 angeordnet ist, wobei die Blendenkante 104 in der Lichtverteilung LV als Hell-Dunkel-Grenze HDG abgebildet wird (siehe **Figur 7** und **Figur 8**).

Die Blendenkante 104 ist dabei dafür verantwortlich, dass das erste Lichtbündel S1 derart zu dem zweiten, aus dem lichtdurchlässigen Körper 100 austretenden Lichtbündel S2 modifiziert wird, dass die von der Projektionsvorrichtung 500 aus den Lichtstrahlen des Lichtbündels S2 erzeugte Lichtverteilung LV eine Hell-Dunkel-Grenze HDG aufweist. Die Form der Hell-Dunkel-Grenze in der Lichtverteilung LV wird von der Form und Kontur der Blendenkante 104 bestimmt.

Die Blendenkante 104 wird von der Lichtaustrittsfläche 102 und der unteren Begrenzungsfläche 106 gebildet, d.h. die beiden Flächen 102, 106 laufen in der Blendenkante 104 zusammen.

Das Lichteinkoppelelement 101 und der lichtdurchlässige Körper 100 sind dabei derart geformt, dass das erste Lichtbündel S1 in Richtung der Lichtaustrittsfläche 102, vorzugsweise aber hauptsächlich in einen Bereich P0, insbesondere einen Bereich, vorzugsweise knapp, oberhalb, der Blendenkante 104 gerichtet wird, wodurch sich eine scharfe Hell-Dunkel-Grenze HDG mit einer unterhalb der Hell-Dunkel-Grenze hohen Beleuchtungsstärke in der Lichtverteilung LV ergibt.

Vorzugsweise ist vorgesehen, dass wie dargestellt die Blendenkante 104 in horizontaler Richtung gekrümmt, insbesondere konkav gekrümmt, ausgebildet ist, und vorzugsweise der Brennpunktlinie F500 der Projektionsvorrichtung 500 in der Blendenkante 104 folgt.

Vorzugsweise ist vorgesehen, dass die Blendenkante 104 in bzw. in etwa in der Petzvalfläche P500 der Projektionsvorrichtung 500 liegt, wie dies in der Einleitung bereits ausgeführt wurde.

Weiters kann, wie dies bei der Beleuchtungsvorrichtung 1 gemäß den **Figuren 1, 1a** **und** **2** der Fall ist, die Lichtaustrittsfläche 102 in vertikaler Richtung konvex ausgebildet sein. Bei dieser gezeigten Ausführungsform ist die Lichtaustrittsfläche102 somit ausgehend von der Blendenkante 104 von der Petzval-Fläche P500 weg, zu der Lichtquelle 10 hin, geneigt. Die erzeugte Lichtverteilung LV wird etwas verschmiert, d.h. die erzeugte Lichtverteilung ist homogener und die Höhe der Projektionsvorrichtung 500 kann verringert werden.

Alternativ kann - siehe **Figur 2a** - vorgesehen sein, dass die Lichtaustrittsfläche 102" in horizontaler Richtung konkav ausgebildet ist und vorzugsweise der Form der Petzvalfläche P500 der Projektionsvorrichtung 500 folgt.

Konkret werden die sich zu der Lichtaustrittsfläche 102, 102" fortpflanzenden und über diese aus dem Körper 100 austretenden Lichtstrahlen von dem lichtleitenden Körper 100, insbesondere auch von der Blendenkante 104, zu einem zweiten Lichtbündel S2 modifiziert, welches von der Projektionsvorrichtung 500 als Lichtverteilung LV mit der Hell-Dunkel-Grenze HDG abgebildet wird.

Wie den **Figuren 1, 1a****,** **2** **und** **2a** weiters zu entnehmen ist, sind an bzw. in der unteren Begrenzungsfläche 106 eine erste optische Auskoppelstruktur 210 und eine zweite optische Auskoppelstruktur 220 vorgesehen. Jede optische Auskoppelstruktur 210, 220 erstreckt sich jeweils über eine definierte Quererstreckung Q₂₁₀, Q₂₂₀ quer zu der optischen Achse X der Projektionsvorrichtung 500 bzw. der Beleuchtungsvorrichtung 1. Jede optische Auskoppelstruktur 210, 220 erstreckt jeweils über eine definierte Längserstreckung L₂₁₀, L₂₂₀ in etwa in der Richtung der optischen Achse X.

Lediglich zur Klarstellung sei an dieser Stelle vermerkt, dass grundsätzlich auch zwei oder mehr erste und auch zwei oder mehr zweite Auskoppelstrukturen vorgesehen sein können, welche dann vorzugsweise jeweils seitlich nebeneinander liegend (erste Strukturen nebeneinander, zweite Strukturen nebeneinander) angeordnet sind.

Die optischen Auskoppelstrukturen 210, 220 sind derart ausgebildet, dass Licht des ersten Lichtbündels S1, welches auf eine optische Auskoppelstruktur 210, 220 trifft, aus dem lichtdurchlässigen Körper 100 austritt.

Das aus den ersten optischen Auskoppelstrukturen 210 austretende Licht pflanzt sich in Form eines dritten Lichtbündels S3 außerhalb des lichtdurchlässigen Körpers 100 zu der Projektionsvorrichtung 500 fort.

Das aus der zweiten optische Auskoppelstruktur 220 austretende Licht pflanzt sich in Form eines vierten Lichtbündels S4 außerhalb des lichtdurchlässigen Körpers 100 zu der Projektionsvorrichtung 500 fort.

Die zweite optische Auskoppelstruktur 220 ist dabei weiter von der Brennfläche P500 entfernt als die ersten optischen Auskoppelstrukturen 210.

Die Anordnung ist dabei dergestalt, dass das dritte und vierte Lichtbündel S3, S4 direkt, d.h. ohne vorhergehenden Wiedereintritt in den lichtdurchlässigen Körper 100, auf die Projektionsvorrichtung 500 auftreffen und von dieser als Signlight-Lichtbündel S3', S4' in einen oberhalb der Hell-Dunkel-Grenze HDG liegenden Bereich B projiziert werden und gemeinsam eine Signlight-Lichtverteilung SV bilden, wobei die beiden Signlight-Lichtbündel S₃', S₄' in unterschiedliche Teilbereiche B1, B2 des oberhalb der Hell-Dunkel-Grenze HDG liegenden Bereiches B abgebildet werden.

Licht S4, welches von der weiter von der Brennfläche P500 entfernten Auskoppelstruktur 220 stammt, erzeugt eine unscharfe bzw. weniger scharfe Abbildung aufgrund der (stark) defokussierten Lage und somit eine bessere Homogenität mit etwa gleicher Beleuchtungsstärke in der erzeugten Lichtverteilung SV4 im Vergleich zu der von den Lichtstrahlen S3 der näher zu der Brennfläche P500 angeordneten ersten Auskoppelstrukturen 210 erzeugten Lichtverteilung SV3.

Die Lichtverteilung SV4, welche von jener Auskoppelstruktur 220, welche weiter von der Brennfläche P500 entfernt ist, erzeugt wird, bildet eine Art die "Grund"-Signlight-Verteilung, welche z.B. die Anforderungen an eine Signlight-Lichtverteilung gemäß ECE erfüllt. Die andere Lichtverteilung SV3 bildet eine Art "Zusatz"-Signlight-Lichtverteilung, mit welcher weitere, über ECE hinausgehende Anforderungen an das Signlight erfüllt werden können und/oder es erlaubt, die "Grund-"Signlight-Lichtverteilung SV4 derart zu modifizieren, z.B. hinsichtlich der erzeugten Beleuchtungsstärke, dass gewisse geforderte Grenzwerte erreicht werden, gemeinsam mit der Zusatz-Signlight-Lichtverteilung SV3 aber trotzdem eine, insbesondere gesetzes- oder regelkonforme, Signlight-Lichtverteilung SV erzeugt werden kann.

Vorzugsweise ist vorgehen, dass das dritte und vierte Lichtbündel S3, S4 in unterschiedlichen Bereichen P1, P2 der Projektionsvorrichtung 500, insbesondere unterhalb einer optischen Achse X der Projektionsvorrichtung 500, auf die Projektionsvorrichtung 500 auftreffen und durch diese durchtreten, wobei diese Bereiche der Projektionsvorrichtung 500 das dritte und vierte Lichtbündel S3, S4 als Signlight-Lichtbündel S3', S4' in den oberhalb der Hell-Dunkel-Grenze HDG liegenden Bereich B projizieren und beispielsweise die Signlight-Lichtverteilung SV bilden, wobei die beiden Signlight-Lichtbündel S3', S4' wie beschrieben in unterschiedliche Teilbereiche B1, B2 des oberhalb der Hell-Dunkel-Grenze HDG liegenden Bereiches B abgebildet werden.

Die erste bzw. die ersten optischen Auskoppelstruktur 210 und die zweite optische Auskoppelstruktur 220 sind vorzugsweise derart ausgebildet und angeordnet, dass das dritte und vierte Lichtbündel S3, S4 derart auf die Projektionsvorrichtung 500 bzw. in einem Bereich P1, P2 der Projektionsvorrichtung 500 auftreffen, dass die Teilbereiche B1, B2, in welche die austretenden Signlight-Lichtbündel S3', S4' von der Projektionsvorrichtung 500 projiziert werden, sich entweder teilweise überlappen, oder zumindest in einem Abschnitt aneinander angrenzen, oder voneinander beabstandet sind.

**Figur 8** zeigt beispielhafte Simulationsergebnisse. Teilbereich B1 liegt in Bezug auf die vertikale 0°-Achse nach rechts versetzt knapp oberhalb der Hell-Dunkel-Grenze vergleichsweise konzentriert, während der oberhalb liegende Teilbereich B2 symmetrisch zur vertikalen 0°-Achse verläuft und deutlich weniger konzentriert als Teilbereich B1 ist, d.h. sich sowohl in horizontaler als auch vertikaler Richtung über einen deutlich größeren Winkelbereich erstreckt. Die Oberkante des Teilbereiches B1 verschmilzt sich mit der Unterkante des Teilbereiches B2. Die gesamte Signlight-Verteilung SV ergibt sich durch die Teil-Signlight-Lichtverteilungen SV3, SV4, welche in den Teilbereich B1 bzw. B2 abgebildet werden und kann durch SV = SV(S3') ∪ SV(S4') beschrieben werden.

In der gezeigten Ausführungsform (die für **Figur 2** und **Figur 2a** identisch ist) sind die ersten optischen Auskoppelstrukturen 210 als Erhöhung an dem lichtdurchlässigen Körper 100, konkret an der Unterseite 106, ausgebildet, ebenso ist die zweite optische Auskoppelstruktur 220 als Erhöhung an dem lichtdurchlässigen Körper 100, wiederum an der Unterseite 106, ausgebildet.

Die in **Figur 7** und **Figur 8** gezeigten Signlight-Lichtverteilungen SV3, SV4 (mit deutlich unterschiedlichen Horizontalerstreckungen) werden dadurch erreicht, dass die erste und die zweite optische Auskoppelstruktur 210, 220, wie in **Figur 1a** zu erkennen, eine unterschiedlich große Querstreckung Q₂₁₀, Q₂₂₀ aufweisen, wobei die näher bei der Lichtaustrittsfläche 102 befindliche, erste Auskoppelstruktur 210 eine geringere Quererstreckung Q₂₁₀ aufweist als die zweite Auskoppelstruktur Q₂₂₀.Auf diese Weise kann die aus den Auskoppelstrukturen austretende Lichtmenge gesteuert werden. Außerdem ist die zweite Auskoppelstruktur 220 symmetrisch in Bezug auf die optische Achse X angeordnet, während die erste Auskoppelstruktur 210 in Bezug auf die optische Achse X nach links verschoben ist und sich vorzugsweise vollständig links der optischen Achse X befindet.

Im gezeigten Ausführungsbeispiel erstreckt sich die zweite Auskoppelstruktur 220 durchgehend von links nach rechts über im Wesentlichen eine gesamte Breite des lichtdurchlässigen bzw. lichtleitenden Körpers 100, die Ausdehnung zu beiden Seiten der optischen Achse X ist ident.

Unabhängig von der konkreten Anzahl der ersten und zweiten Auskoppelstrukturen 210, 220 und der Anordnung in Bezug auf die optische Achse X ist vorzugsweise vorgesehen, dass die (Teil-)Signlight-Lichtverteilung SV4 der Lichtbündel S4 symmetrisch in Bezug auf eine vertikale 0°-0°-Linie (V-V-Linie) im Lichtbild ist, während vorzugsweise die (Teil-)Signlight-Lichtverteilung SV3 der Lichtbündel S3 asymmetrisch in Bezug auf die vertikale 0°-0°-Linie (V-V-Linie, vertikal Zentrallinie bei H = 0°) im Lichtbild ist und bei Scheinwerfern für Rechtsverkehr nach rechts verschoben ist, sowie bei Scheinwerfern für Linksverkehr nach Links verschoben wäre.

Nochmals zurückkommend auf die Figuren 1a sowie 3 - 6 ist erkennbar, dass vorzugsweise vorgesehen ist, dass die Querrichtung, in welche sich die erste und zweite optische Auskoppelstruktur 210, 220 erstrecken, im Wesentlichen normal zu der optischen Achse X der Projektionsvorrichtung 500 und im Wesentlichen horizontal verlaufen.

Betrachtet man die Auskoppelstrukturen 210, 220 im Detail, sind diese vorzugsweise jeweils wie gezeigt in etwa in der Form eines Auskoppelprismas ausgebildet. Die Auskoppelprismen weisen jeweils eine Austrittsfläche 210a, 220a auf, welche derart geneigt ist, dass die austretenden Lichtbündel S3, S4 in den bzw. die Bereiche P1, P2der Projektionsvorrichtung 500, welche das dritte und vierte Lichtbündel S3, S4 Signlight-Lichtbündel S3', S4' in den oberhalb der Hell-Dunkel-Grenze HDG liegenden Bereich B projizieren, gerichtet wird.

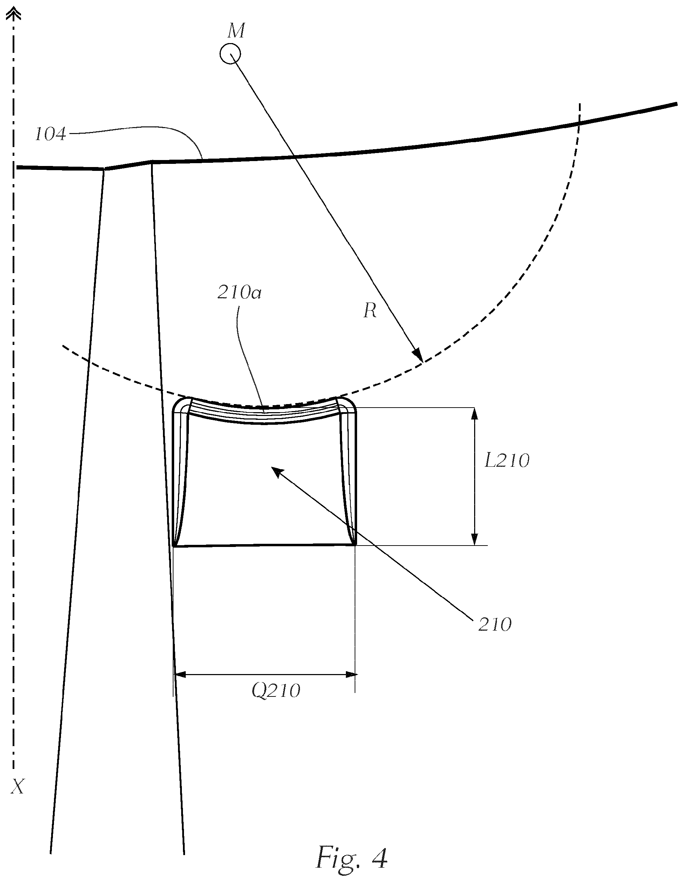

Abweichend von der prismatischen Form ist vorgesehen, dass die Austrittsflächen 210a, 220a horizontal, d.h. in horizontalen Schnitten, gekrümmt, insbesondere konkav gekrümmt sind, wobei vorzugsweise horizontale Schnittkurven, die sich durch Schneiden einer derart gekrümmten Austrittsfläche 210a, 220a mit horizontalen Ebenen ergeben, die Form jeweils eines Teilkreises aufweisen oder der Form der Petzvalfläche der Projektionsvorrichtung folgen. **Figur 4** zeigt dabei eine ausgewählte Schnittkurve in einer horizontalen Schnittebene, wobei die Schnittkurve einen Teilkreis mit Mittelpunkt M und Radius R darstellt. In unterschiedlichen horizontalen Schnittebenen können die Schnittkurven identische Radien aufweisen und die Mittelpunkte liegen in einer (vertikalen) Linie übereinander; es kann aber auch vorgesehen sein, dass in unterschiedlichen horizontalen Schnittebenen die Radien unterschiedlich sind, insbesondere kann vorgesehen sein, dass die Radien wachsen, wenn man sich von der äußersten horizontalen Schnittebene in Richtung des Körpers 100 bewegt. Die Mittelpunkte liegen vorzugsweise wiederum auf einer vertikalen Linie, die Teilkreis in unterschiedlichen horizontalen Schnittebenen sind somit gleichsam "konzentrische" Teilkreise.

Weiters ist vorzugsweise vorgesehen, dass vertikal, d.h. in vertikalen Schnitten, die beide Austrittsflächen 210a, 220a nicht gekrümmt sind. Die sich durch Schneiden der Austrittsflächen 210a, 220a mit vertikalen Ebenen ergebenden Schnittkurven sind somit Geraden.

Weiters ist bevorzugt vorgesehen, dass die Austrittsflächen 210a, 220a zu der optischen Achse X um einen Winkel derart geneigt sind, dass die durch durchtretenden bzw. austretende S₃, S₄ orthogonal auf die ebene Auftrittsfläche 210a, 220a verlaufen.

Abschließend wird nochmals auf **Figur 7** verwiesen, welche Messpunkte der Beleuchtungsstärke für die Regulierung für Signlight-Lichtverteilungen nach FMVSS108 und die Unterschiede zu Vorschriften zum ECE-Raum zeigt.

In dem schräg schraffierten Bereich, in welchem die Linien 5 - 5 und 8 - 8 liegen, bestehen Unterschiede hinsichtlich der geforderten bzw. maximal erlaubten Beleuchtungsstärke der Signlight-Lichtverteilung, insbesondere muss bei der Regelung FMVSS108 die Beleuchtungsstärke entlang dieser beiden Linien muss höher sein als in der der ECE-Regelung gefordert werden.

In **Figur 8** wird, wie bereits oben beschrieben, eine tatsächliche Lichtverteilung unter Ausnutzung der erfindungsgemäßen Auskoppelstrukturen 210, 220 dargestellt. Der Bereich B2 wird über die "rückwärtigen" Auskoppelelemente 220 gleichmäßig von links nach rechts ausgeleuchtet. Die einseitig links angebrachte Auskoppelstruktur 210 beleuchtet den asymmetrisch rechten Bereich B1 und gleicht die Unterschiede zwischen US-amerikanischen und europäischen Vorschriften aus.

## Patentansprüche

1. Beleuchtungsvorrichtung (1) für einen Kraftfahrzeugscheinwerfer zum Erzeugen einer Lichtverteilung (LV) mit einer Hell-Dunkel-Grenze (HDG), wobei die Beleuchtungsvorrichtung
• zumindest eine Lichtquelle (10),
• einen lichtdurchlässigen Körper (100),
• zumindest ein Lichteinkoppelelement (101) zum Einkoppeln von Licht, welches die zumindest eine Lichtquelle (10) emittiert, in den lichtdurchlässigen Körper (100) sowie
• eine Projektionsvorrichtung (500) aufweist, wobei die Projektionsvorrichtung (500) eine Brennfläche (P500) sowie eine optische Achse (X) aufweist,
wobei
über das Lichteinkoppelelement (101) Licht (S10) der zumindest einen Lichtquelle (10) in den lichtdurchlässigen Körper (100) einkoppelt, welches sich in dem lichtdurchlässigen Körper (100) als erstes Lichtbündel (S1) zu einer Lichtaustrittsfläche (102) des lichtdurchlässigen Körpers (100) fortpflanzt, und wobei
der lichtdurchlässige Körper (100) von einer oberen Begrenzungsfläche (105) und einer der oberen Begrenzungsfläche (105) gegenüberliegenden unteren Begrenzungsfläche (106) begrenzt ist, wobei
zumindest ein Teil der an der oberen und/oder unteren Begrenzungsfläche (105, 106) auftreffenden Lichtstrahlen des ersten Lichtbündels (S1) an der jeweiligen Begrenzungsfläche (105, 106) ein- oder mehrfach totalreflektiert wird, und wobei
der lichtdurchlässige Körper (100) von der Lichtaustrittsfläche (102, 102") begrenzt ist, und
wobei
die an der zumindest einen Begrenzungsfläche (105, 106) ein- oder mehrfach totalreflektierten Lichtstrahlen, welche über die Lichtaustrittsfläche (102, 102") aus dem Körper (100) austreten, sowie jene von der Lichtquelle (10) eingekoppelten Lichtstrahlen, welche sich ohne Reflexion durch den lichtdurchlässigen Körper (100) bis zu der Lichtaustrittsfläche (102, 102") fortpflanzen und über diese aus dem Körper (100) austreten, von dem lichtleitenden Körper (100) zu einem zweiten Lichtbündel (S2) modifiziert wird, welches von der Projektionsvorrichtung (500) als die zu erzeugende Lichtverteilung (LV) abgebildet wird,
**dadurch gekennzeichnet, dass**
an bzw. in der unteren Begrenzungsfläche (106) zumindest eine erste optische Auskoppelstruktur (210) und zumindest eine zweite optische Auskoppelstruktur (220) vorgesehen sind, wobei
die optischen Auskoppelstrukturen (210, 220) derart ausgebildet sind, dass Licht des ersten Lichtbündels (S1), welches auf eine optische Auskoppelstruktur (210, 220) trifft, aus dem lichtdurchlässigen Körper (100) austritt, wobei
das aus der zumindest einen ersten optische Auskoppelstruktur (210) austretende Licht sich in Form eines dritten Lichtbündels (S3) außerhalb des lichtdurchlässigen Körpers (100) zu der Projektionsvorrichtung (500) fortpflanzt, und wobei
das aus der zumindest einen zweiten optische Auskoppelstruktur (220) austretende Licht sich in Form eines vierten Lichtbündels (S4) außerhalb des lichtdurchlässigen Körpers (100) zu der Projektionsvorrichtung (500) fortpflanzt, wobei
die zumindest eine zweite optische Auskoppelstruktur (220) weiter von der Brennfläche (P500) entfernt ist als die zumindest eine erste optische Auskoppelstruktur (210), und wobei das dritte und vierte Lichtbündel (S3, S4) direkt, d.h. ohne vorhergehenden Wiedereintritt in den lichtdurchlässigen Körper (100), auf die Projektionsvorrichtung (500) auftreffen und von dieser als Signlight-Lichtbündel (S3', S4') in einen oberhalb der Hell-Dunkel-Grenze (HDG) liegenden Bereich (B) projiziert werden und gemeinsam eine Signlight-Lichtverteilung (SV) bilden, wobei die beiden Signlight-Lichtbündel (S3', S4') in unterschiedliche Teilbereiche (B1, B2) des oberhalb der Hell-Dunkel-Grenze (HDG) liegenden Bereiches (B) abgebildet werden.

2. Beleuchtungsvorrichtung nach Anspruch 1, wobei das dritte und vierte Lichtbündel (S3, S4) in unterschiedlichen Bereichen (P1, P2) der Projektionsvorrichtung (500), insbesondere unterhalb einer optischen Achse (X) der Projektionsvorrichtung (500), auf die Projektionsvorrichtung (500) auftreffen und durch diese durchtreten, wobei diese Bereiche der Projektionsvorrichtung (500) das dritte und vierte Lichtbündel (S3, S4) als Signlight-Lichtbündel (S3', S4') in den oberhalb der Hell-Dunkel-Grenze (HDG) liegenden Bereich (B) projizieren und die Signlight-Lichtverteilung (SV) bilden, wobei die beiden Signlight-Lichtbündel (S3', S4') in unterschiedliche Teilbereiche (B1, B2) des oberhalb der Hell-Dunkel-Grenze (HDG) liegenden Bereiches (B) abgebildet werden.

3. Beleuchtungsvorrichtung nach einem der vorhergehenden Ansprüche, wobei die zumindest eine erste optische Auskoppelstruktur (210) und die zumindest eine zweite optische Auskoppelstruktur (220) derart ausgebildet und angeordnet sind, dass das dritte und vierte Lichtbündel (S3, S4) derart auf die Projektionsvorrichtung (500) bzw. in einem Bereich (P1, P2) der Projektionsvorrichtung (500) auftreffen, dass die Teilbereiche (B1, B2), in welche die austretenden Signlight-Lichtbündel (S3', S4') von der Projektionsvorrichtung (500) projiziert werden, sich entweder teilweise überlappen, oder zumindest in einem Abschnitt aneinander angrenzen, oder voneinander beabstandet sind.

4. Beleuchtungsvorrichtung nach einem der vorhergehenden Ansprüche, wobei die zumindest eine erste optische Auskoppelstruktur (210) als Erhöhung an oder als Vertiefung in dem lichtdurchlässigen Körper (100) ausgebildet ist, und wobei die zumindest eine zweite optische Auskoppelstruktur (220) als Erhöhung an oder als Vertiefung in dem lichtdurchlässigen Körper (100) ausgebildet ist.

5. Beleuchtungsvorrichtung nach einem der vorhergehenden Ansprüche, wobei sich die zumindest eine erste und die zumindest eine zweite optische Auskoppelstruktur (210, 220) jeweils über eine definierte Quererstreckung (Q210, Q220) quer zu der optischen Achse (X) der Projektionsvorrichtung (500) erstreckt, und wobei sich die zumindest eine erste und die zumindest eine zweite optische Auskoppelstruktur (210, 220) jeweils über eine definierte Längserstreckung (L210, L220) in etwa in Richtung der optischen Achse (X) der Projektionsvorrichtung (500) erstrecken.

6. Beleuchtungsvorrichtung nach Anspruch 5, **wobei** die zumindest eine erste und die zumindest eine zweite optische Auskoppelstruktur (210, 220) eine unterschiedlich große Querstreckung (Q210, Q220) aufweisen, wobei vorzugsweise die näher bei der Lichtaustrittsfläche (102) befindliche, zumindest eine erste Auskoppelstruktur (210) eine geringere Quererstreckung (Q210) aufweist als die zumindest eine zweite Auskoppelstruktur (Q220).

7. Beleuchtungsvorrichtung nach Anspruch 5 oder 6, **wobei** zumindest eine der optischen Auskoppelstrukturen hinsichtlich ihrer Quererstreckung symmetrisch in Bezug auf die optische Achse (X) der Projektionsvorrichtung (500) verläuft, wobei vorzugsweise eine erste oder zweite optische Auskoppelstruktur (220) symmetrisch und die andere, zweite oder erste optische Auskoppelstruktur (210) asymmetrisch in Bezug auf die optische Achse (X) der Projektionsvorrichtung (500) verläuft.

8. Beleuchtungsvorrichtung nach einem der Ansprüche 5 bis 7, **wobei** die Querrichtung, in welche sich die zumindest eine erste und/oder die zumindest eine zweite optische Auskoppelstruktur (210, 220) erstreckt bzw. erstrecken, im Wesentlichen normal zu der optischen Achse (X) der Projektionsvorrichtung (500) und vorzugsweise im Wesentlichen horizontal verläuft bzw. verlaufen.

9. Beleuchtungsvorrichtung nach einem der vorhergehenden Ansprüche, **wobei** die zumindest eine erste und/oder die zumindest eine zweite Auskoppelstruktur (210, 220) in Form eines Auskoppelprismas ausgebildet ist bzw. sind oder Auskoppelprismen aufweist/ aufweisen.

10. Beleuchtungsvorrichtung nach Anspruch 9, **wobei** jedes Auskoppelprisma eine Austrittsfläche (210a, 220a) aufweist, welche derart ausgebildet und derart geneigt ist, dass die austretenden Lichtbündel (S3, S4) in den bzw. die Bereiche der Projektionsvorrichtung (500), welche das dritte und vierte Lichtbündel (S3, S4) als Signlight-Lichtbündel (S3', S4') in den oberhalb der Hell-Dunkel-Grenze (HDG) liegenden Bereich (B) projizieren, gerichtet wird.

11. Beleuchtungsvorrichtung nach Anspruch 9 oder 10, **wobei** zumindest eine Austrittsfläche (210a, 220a) bzw. beide Austrittsflächen (210a, 220a) horizontal, d.h. in horizontalen Schnitten, gekrümmt, insbesondere konkav gekrümmt ist bzw. sind, wobei vorzugsweise horizontale Schnittkurven, die sich durch Schneiden einer derart gekrümmten Austrittsfläche (210a, 220a) mit horizontalen Ebenen ergeben, die Form eines Teilkreises aufweisen oder der Form der Petzvalfläche (F500) der Projektionsvorrichtung (500) folgen.

12. Beleuchtungsvorrichtung nach einem der Ansprüche 9 bis 11, **wobei** vertikal, d.h. in vertikalen Schnitten, die zumindest eine bzw. vorzugsweise beide Austrittsflächen (210a, 220a) nicht gekrümmt sind.

13. Beleuchtungsvorrichtung nach einem der Ansprüche 9 bis 12, **wobei** eine Austrittsfläche (210a, 220a) bzw. die Austrittsflächen (210a, 220a) derart geneigt sind, dass die durch die Austrittsfläche (210a, 220a) bzw. durch die Austrittsflächen (210a, 220a) durchtretenden bzw. austretenden Lichtbündel (S3, S4) orthogonal auf die Auftrittsfläche bzw. die Austrittsflächen verlaufen.

14. Beleuchtungsvorrichtung nach einem der vorhergehenden Ansprüche, **wobei** der lichtdurchlässige Körper (100) eine Blendenkante (104) aufweist, welche in Lichtausbreitungsrichtung zwischen dem Lichteinkoppelelement (101) und der Projektionsvorrichtung (500) angeordnet ist, wobei die Blendenkante (104) in der Lichtverteilung (LV) als die Hell-Dunkle-Grenze (HDG) abgebildet wird.

15. Beleuchtungsvorrichtung nach einem der vorhergehenden Ansprüche, **wobei** das Lichteinkoppelelement (101) das von der Lichtquelle (10) emittierte, in das Lichteinkoppelelement (101) eingekoppelte Licht, zu dem ersten Lichtbündel (S1) formt, wobei vorzugsweise das Lichtbündel (S1) in einen definierten Bereich (P0) der Blendenkante (104) gerichtet ist.

16. Beleuchtungsvorrichtung nach einem der vorhergehenden Ansprüche, **wobei** die Blendenkante (104) in horizontaler Richtung gekrümmt, insbesondere konkav gekrümmt, ausgebildet ist, und vorzugsweise der Brennpunktlinie (F500) der Projektionsvorrichtung (500) in der Blendenkante (104) folgt, wobei vorzugsweise die Blendenkante (104) in der Petzvalfläche (P500) der Projektionsvorrichtung (500) liegt.

17. Beleuchtungsvorrichtung nach einem der vorhergehenden Ansprüche, wobei die Lichtaustrittsfläche (102") in horizontaler Richtung konkav ausgebildet ist und vorzugsweise der Form der Petzvalfläche (P500) der Projektionsvorrichtung (500) folgt.

18. Beleuchtungsvorrichtung nach einem der Ansprüche 1 bis 17, wobei die Lichtaustrittsfläche (102) in vertikaler Richtung konvex ausgebildet ist.

19. Kraftfahrzeugscheinwerfer mit zumindest einer Beleuchtungsvorrichtung nach einem der Ansprüche 1 bis 18.

## Claims

1. Lighting device (1) for a motor vehicle headlight for generating a light distribution (LV) with a cut-off line (HDG), wherein the lighting device comprises
• at least one light source (10),
• a light-transmissive body (100),
• at least one light coupling element (101) for coupling light emitted by the at least one light source (10) into the light-transmissive body (100), and
• a projection device (500), wherein the projection device (500) has a focal surface (P500) and an optical axis (X),
wherein
light (S10) from the at least one light source (10) is coupled into the light-transmissive body (100) via the light coupling element (101), which propagates in the light-transmissive body (100) as a first light beam (S1) to a light exit surface (102) of the light-transmissive body (100), and wherein
the light-transmissive body (100) is bounded by an upper boundary surface (105) and a lower boundary surface (106) opposite the upper boundary surface (105), wherein
at least some of the light rays of the first light beam (S1) incident on the upper and/or lower boundary surface (105, 106) are totally reflected once or several times at the respective boundary surface (105, 106), and wherein
the light-transmissive body (100) is bounded by the light exit surface (102, 102"), and wherein
the light beams that are totally reflected one or more times at the at least one boundary surface (105, 106) and exit the body (100) via the light exit surface (102, 102") from the body (100), as well as those light beams coupled in from the light source (10) which propagate without reflection through the light-transmissive body (100) to the light exit surface (102, 102") and exit the body (100) via this surface,
is modified by the light-conducting body (100) into a second light beam (S2), which is imaged by the projection device (500) as the light distribution (LV) to be generated,
**characterized in that**
at least one first optical coupling structure (210) and at least one second optical coupling structure (220) are provided on or in the lower boundary surface (106), wherein
the optical coupling structures (210, 220) are designed such that light from the first light beam (S1) that strikes an optical coupling structure (210, 220) exits the light-transmissive body (100), wherein
the light emerging from the at least one first optical coupling structure (210) propagates outside the light-transmissive body (100) in the form of a third light beam (S3) to the projection device (500), and wherein
the light emerging from the at least one second optical coupling structure (220) propagates in the form of a fourth light beam (S4) outside the light-transmissive body (100) to the projection device (500), wherein
the at least one second optical coupling structure (220) is further away from the focal surface (P500) than the at least one first optical coupling structure (210), and wherein
the third and fourth light beams (S3, S4) strike the projection device (500) directly, i.e., without first re-entering the light-transmissive body (100), and are projected by the latter as sign light beams (S3', S4') into an area (B) located above the light-dark boundary (HDG) and together form a signlight light distribution (SV), wherein the two signlight light beams (S3', S4') are projected into different sub-areas (B1, B2) of the area (B) located above the light-dark boundary (HDG).

2. Lighting device according to claim 1, wherein the third and fourth light beams (S3, S4) strike the projection device (500) in different areas (P1, P2) of the projection device (500), in particular below an optical axis (X) of the projection device (500), and pass through it, wherein these areas of the projection device (500) form the third and fourth light beams (S3, S4) as signlight light beams (S3', S4') in the area (B) above the light-dark boundary (HDG) and form the signlight light distribution (SV), wherein the two signlight light beams (S3', S4') are imaged in different sub-areas (B1, B2) of the area (B) located above the light-dark boundary (HDG).

3. Lighting device according to one of the preceding claims, wherein the at least one first optical coupling structure (210) and the at least one second optical coupling structure (220) are designed and arranged such that the third and fourth light beams (S3, S4) strike the projection device (500) or an area (P1, P2) of the projection device (500) in such a way that the sub-areas (B1, B2) into which the emerging Signlight light beams (S3', S4') are projected by the projection device (500) either partially overlap, or at least adjoin each other in one section, or are spaced apart from each other.

4. Lighting device according to one of the preceding claims, wherein the at least one first optical coupling structure (210) is formed as a raised portion on or as a recess in the light-transmissive body (100), and wherein the at least one second optical coupling structure (220) is formed as a raised portion on or as a recess in the light-transmissive body (100).

5. Lighting device according to one of the preceding claims, wherein the at least one first and the at least one second optical coupling structure (210, 220) each extend transversely across a defined transverse extension (Q210, Q220) transverse to the optical axis (X) of the projection device (500), and wherein the at least one first and the at least one second optical coupling structure (210, 220) each extend over a defined longitudinal extent (L210, L220) approximately in the direction of the optical axis (X) of the projection device (500).

6. Lighting device according to claim 5, wherein the at least one first and the at least one second optical coupling structure (210, 220) have a different transverse extent (Q210, Q220), wherein preferably the at least one first coupling structure (210) located closer to the light exit surface (102) has a smaller transverse extension (Q210) than the at least one second coupling structure (Q220).

7. Lighting device according to claim 5 or 6, wherein at least one of the optical coupling structures is symmetrical with respect to the optical axis (X) of the projection device (500) in terms of its transverse extension, wherein preferably a first or second optical coupling structure (220) is symmetrical and the other, second or first optical coupling structure (210) is asymmetrical with respect to the optical axis (X) of the projection device (500).

8. Lighting device according to one of claims 5 to 7, wherein the transverse direction in which the at least one first and/or the at least one second optical coupling structure (210, 220) extends or extend is essentially normal to the optical axis (X) of the projection device (500) and preferably essentially horizontal.

9. Lighting device according to one of the preceding claims, wherein the at least one first and/or the at least one second coupling structure (210, 220) is or are designed in the form of a coupling prism or has or have coupling prisms.

10. Lighting device according to claim 9, wherein each decoupling prism has an exit surface (210a, 220a) which is designed and inclined in such a way that the exiting light beams (S3, S4) are directed into the area or areas of the projection device (500) which project the third and fourth light beams (S3, S4) as signal light beams (S3', S4') into the area (B) above the light-dark boundary (HDG).

11. Lighting device according to claim 9 or 10, wherein at least one exit surface (210a, 220a) or both exit surfaces (210a, 220a) are curved horizontally, i.e., in horizontal sections, in particular concave, wherein preferably horizontal section curves resulting from intersecting such a curved exit surface (210a, 220a) with horizontal planes have the shape of a partial circle or follow the shape of the Petzval surface (F500) of the projection device (500).

12. Lighting device according to one of claims 9 to 11, wherein vertically, i.e., in vertical sections, at least one or preferably both exit surfaces (210a, 220a) are not curved.

13. Lighting device according to one of claims 9 to 12, wherein an exit surface (210a, 220a) or the exit surfaces (210a, 220a) are inclined in such a way that the light beams (S3, S4) passing through or emerging from the exit surface (210a, 220a) or the exit surfaces (210a, 220a) pass through or emerge from the exit surface or exit surfaces run orthogonally to the entrance surface or exit surfaces.

14. Lighting device according to one of the preceding claims, wherein the light-transmissive body (100) has an aperture edge (104) which is arranged in the light propagation direction between the light coupling element (101) and the projection device (500), wherein the aperture edge (104) is depicted in the light distribution (LV) as the light-dark boundary (HDG).

15. Lighting device according to one of the preceding claims, wherein the light coupling element (101) forms the light emitted by the light source (10) and coupled into the light coupling element (101) into the first light beam (S1), wherein the light beam (S1) is preferably directed into a defined area (P0) of the aperture edge (104).

16. Lighting device according to one of the preceding claims, wherein the aperture edge (104) is curved in the horizontal direction, in particular concavely curved, and preferably follows the focal line (F500) of the projection device (500) in the aperture edge (104), wherein the aperture edge (104) is preferably located in the Petzval surface (P500) of the projection device (500).

17. Lighting device according to one of the preceding claims, wherein the light exit surface (102") is concave in the horizontal direction and preferably follows the shape of the Petzval surface (P500) of the projection device (500).

18. Lighting device according to one of claims 1 to 17, wherein the light exit surface (102) is convex in the vertical direction.

19. Motor vehicle headlight with at least one lighting device according to one of claims 1 to 18.

## Revendications

1. Dispositif d'éclairage (1) pour un phare de véhicule automobile destiné à générer une répartition lumineuse (LV) avec une limite clair-obscur (HDG), le dispositif d'éclairage comprenant
• au moins une source lumineuse (10),
• un corps translucide (100),
• au moins un élément de couplage de lumière (101) pour coupler la lumière émise par la au moins une source lumineuse (10) dans le corps translucide (100), ainsi que
• un dispositif de projection (500), le dispositif de projection (500) présentant une surface focale (P500) ainsi qu'un axe optique (X),
la
lumière (S10) provenant de la au moins une source lumineuse (10) étant couplée dans le corps translucide (100) via l'élément de couplage de lumière (101), laquelle lumière se propage dans le corps translucide (100) sous la forme d'un premier faisceau lumineux (S1) vers une surface de sortie de lumière (102) du corps translucide (100), et dans lequel
le corps translucide (100) est délimité par une surface de délimitation supérieure (105) et une surface de délimitation inférieure (106) opposée à la surface de délimitation supérieure (105),
au moins une partie des rayons lumineux du premier faisceau lumineux (S1) incidents sur la surface de délimitation supérieure et/ou inférieure (105, 106) est réfléchie totalement une ou plusieurs fois sur la surface de délimitation respective (105, 106), et dans lequel
le corps translucide (100) est délimité par la surface de sortie de lumière (102, 102"), et où
les rayons lumineux réfléchis totalement une ou plusieurs fois sur au moins une surface de délimitation (105, 106), qui sortent du corps (100) par la surface de sortie de lumière (102, 102") du corps (100), ainsi que les rayons lumineux injectés par la source lumineuse (10) qui se propagent sans réflexion à travers le corps translucide (100) jusqu'à la surface de sortie de lumière (102, 102") et sortent du corps (100) par celle-ci,
est modifié par le corps conducteur de lumière (100) en un deuxième faisceau lumineux (S2) qui est reproduit par le dispositif de projection (500) en tant que répartition lumineuse (LV) à générer,
**caractérisé en ce que**
au moins une première structure de découplage optique (210) et au moins une deuxième structure de découplage optique (220) sont prévues sur ou dans la surface de délimitation inférieure (106),
les structures de découplage optiques (210, 220) sont conçues de telle sorte que la lumière du premier faisceau lumineux (S1) qui frappe une structure de découplage optique (210, 220) sorte du corps translucide (100),
la lumière sortant de la au moins une première structure de découplage optique (210) se propage sous la forme d'un troisième faisceau lumineux (S3) à l'extérieur du corps translucide (100) vers le dispositif de projection (500), et où
la lumière sortant de la au moins une deuxième structure de découplage optique (220) se propage sous la forme d'un quatrième faisceau lumineux (S4) à l'extérieur du corps translucide (100) vers le dispositif de projection (500), où
ladite au moins une deuxième structure optique de découplage (220) est plus éloignée de la surface focale (P500) que ladite au moins une première structure optique de découplage (210), et dans lequel
les troisième et quatrième faisceaux lumineux (S3, S4) frappent directement le dispositif de projection (500), c'est-à-dire sans réentrée préalable dans le corps translucide (100), et sont projetés par celui-ci sous forme de faisceaux lumineux de signalisation (S3', S4') dans une zone (B) située au-dessus de la limite clair-obscur (HDG) et forment ensemble une répartition lumineuse de signalisation (SV), les deux faisceaux lumineux de signalisation (S3', S4') sont représentés dans différentes zones partielles (B1, B2) de la zone (B) située au-dessus de la limite clair-obscur (HDG).

2. Dispositif d'éclairage selon la revendication 1, dans lequel les troisième et quatrième faisceaux lumineux (S3, S4) frappent le dispositif de projection (500) dans différentes zones (P1, P2) de celui-ci, en particulier en dessous d'un axe optique (X) du dispositif de projection (500), et le traversent, ces zones du dispositif de projection (500) réfléchissant les troisième et quatrième faisceaux lumineux (S3, S4) en tant que faisceaux lumineux de signalisation (S3', S4') dans la zone (B) située au-dessus de la limite clair-obscur (HDG) et forment la répartition lumineuse de signalisation (SV), les deux faisceaux lumineux de signalisation (S3', S4') sont représentés dans différentes zones partielles (B1, B2) de la zone (B) située au-dessus de la limite clair-obscur (HDG).

3. Dispositif d'éclairage selon l'une des revendications précédentes, dans lequel la au moins une première structure de découplage optique (210) et la au moins une deuxième structure de découplage optique (220) sont conçues et disposées de telle sorte que les troisième et quatrième faisceaux lumineux (S3, S4) frappent le dispositif de projection (500) ou une zone (P1, P2) du dispositif de projection (500) de telle sorte que les zones partielles (B1, B2) dans lesquelles les faisceaux lumineux Signlight (S3', S4') sortants sont projetés par le dispositif de projection (500) se chevauchent partiellement, ou au moins se touchent dans une partie, ou sont espacées les unes des autres.

4. Dispositif d'éclairage selon l'une des revendications précédentes, dans lequel la au moins une première structure optique de découplage (210) est réalisée sous forme de surélévation ou de renfoncement dans le corps translucide (100), et dans lequel la au moins une deuxième structure optique de découplage (220) est conçue comme une élévation ou un renfoncement dans le corps translucide (100).

5. Dispositif d'éclairage selon l'une des revendications précédentes, dans lequel la au moins une première et la au moins une deuxième structure de découplage optique (210, 220) s'étendent chacune sur une extension transversale définie (Q210, Q220) perpendiculairement à l'axe optique (X) du dispositif de projection (500), et dans lequel la au moins une première et la au moins une deuxième structure de découplage optique (210, 220) s'étendent chacune sur une extension longitudinale définie (L210, L220) s'étendent approximativement dans la direction de l'axe optique (X) du dispositif de projection (500).

6. Dispositif d'éclairage selon la revendication 5, dans lequel la au moins une première et la au moins une deuxième structure de découplage optique (210, 220) présentent une extension transversale de taille différente (Q210, Q220) de tailles différentes, de préférence, la au moins une première structure de découplage (210) située plus près de la surface de sortie de lumière (102) ayant une extension transversale (Q210) plus petite que la au moins une deuxième structure de découplage (Q220).

7. Dispositif d'éclairage selon la revendication 5 ou 6, dans lequel au moins l'une des structures de découplage optique s'étend symétriquement par rapport à l'axe optique (X) du dispositif de projection (500) en ce qui concerne son extension transversale, de préférence une première ou une deuxième structure de découplage optique (220) étant symétrique et l'autre, deuxième ou première structure de découplage optique (210) est asymétrique par rapport à l'axe optique (X) du dispositif de projection (500).

8. Dispositif d'éclairage selon l'une des revendications 5 à 7, dans lequel la direction transversale dans laquelle s'étend au moins une première et/ou au moins une deuxième structure de découplage optique (210, 220) s'étend ou s'étendent est essentiellement normale à l'axe optique (X) du dispositif de projection (500) et s'étend ou s'étendent de préférence essentiellement horizontalement.

9. Dispositif d'éclairage selon l'une des revendications précédentes, dans lequel la au moins une première et/ou la au moins une deuxième structure de découplage (210, 220) est ou sont conçues sous la forme d'un prisme de découplage ou comportent des prismes de découplage.

10. Dispositif d'éclairage selon la revendication 9, dans lequel chaque prisme de découplage présente une surface de sortie (210a, 220a) qui est conçue et inclinée de telle sorte que les faisceaux lumineux sortants (S3, S4) soient dirigés vers la ou les zones du dispositif de projection (500) qui projettent les troisième et quatrième faisceaux lumineux (S3, S4) sous forme de faisceaux lumineux de signalisation (S3', S4') dans la zone (B) située au-dessus de la limite clair-obscur (HDG).

11. Dispositif d'éclairage selon la revendication 9 ou 10, dans lequel au moins une surface de sortie (210a, 220a) ou les deux surfaces de sortie (210a, 220a) sont courbées horizontalement, c'est-à-dire dans des sections horizontales, en particulier de manière concave, les courbes de coupe horizontales qui résultent de l'intersection d'une surface de sortie ainsi courbée (210a, 220a) avec des plans horizontaux ayant de préférence la forme d'un cercle partiel ou suivant la forme de la surface de Petzval (F500) du dispositif de projection (500).

12. Dispositif d'éclairage selon l'une des revendications 9 à 11, dans lequel verticalement, c'est-à-dire dans des sections verticales, au moins l'une ou de préférence les deux surfaces de sortie (210a, 220a) ne sont pas courbées.

13. Dispositif d'éclairage selon l'une des revendications 9 à 12, dans lequel une surface de sortie (210a, 220a) ou les surfaces de sortie (210a, 220a) sont inclinées de telle sorte que les faisceaux lumineux (S3, S4) traversant ou sortant par la surface de sortie (210a, 220a) ou par les surfaces de sortie (210a, 220a) sont orthogonaux à la surface d'entrée ou aux surfaces de sortie.

14. Dispositif d'éclairage selon l'une des revendications précédentes, dans lequel le corps translucide (100) présente un bord de diaphragme (104) qui est disposé dans la direction de propagation de la lumière entre l'élément de couplage de lumière (101) et le dispositif de projection (500), le bord de diaphragme (104) est représenté dans la répartition lumineuse (LV) comme la limite clair-foncé (HDG).

15. Dispositif d'éclairage selon l'une des revendications précédentes, dans lequel l'élément de couplage de lumière (101) forme la lumière émise par la source lumineuse (10) et couplée dans l'élément de couplage de lumière (101) en un premier faisceau lumineux (S1), le faisceau lumineux (S1) étant de préférence dirigé dans une zone définie (P0) du bord du diaphragme (104).

16. Dispositif d'éclairage selon l'une des revendications précédentes, dans lequel le bord du diaphragme (104) est courbé dans le sens horizontal, en particulier de manière concave, et suit de préférence la ligne focale (F500) du dispositif de projection (500) dans le bord du diaphragme (104), le bord du diaphragme (104) se trouvant de préférence dans la surface de Petzval (P500) du dispositif de projection (500).

17. Dispositif d'éclairage selon l'une des revendications précédentes, la surface de sortie de lumière (102") étant concave dans le sens horizontal et suivant de préférence la forme de la surface de Petzval (P500) du dispositif de projection (500).

18. Dispositif d'éclairage selon l'une des revendications 1 à 17, dans lequel la surface de sortie de lumière (102) est convexe dans le sens vertical.

19. Projecteur de véhicule automobile comprenant au moins un dispositif d'éclairage selon l'une des revendications 1 à 18.
